(19) Europäisches Patentamt
European Patent Office
Office européen des brevets

(11) EP 4 600 277 A1

(12) EUROPEAN PATENT APPLICATION

(43) Date of publication:
**13.08.2025 Bulletin 2025/33**

(21) Application number: **24156233.9**

(22) Date of filing: **07.02.2024**

(51) International Patent Classification (IPC):
***C08F 210/06** (2006.01)*

(52) Cooperative Patent Classification (CPC):
(C-Sets available)
**C08F 210/06; C08L 23/142;** C08L 2205/025
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Abu Dhabi Polymers Co. Ltd (Borouge) - Sole Proprietorship L.L.C.**
  **Abu Dhabi (AE)**
- **Borealis GmbH**
  **1020 Vienna (AT)**

(72) Inventors:
- **KUMAR DAS, Subrata**
  **Abu Dhabi (AE)**
- **VAN CAUWENBERGHE, Hans Jozef Francois**
  **Abu Dhabi (AE)**
- **SINGH, Raghvendra**
  **Abu Dhabi (AE)**
- **DIXIT, Niraj**
  **400063 Mumbai (IN)**
- **SOBOH, Mohammed**
  **Abu Dhabi (AE)**

(74) Representative: **Maiwald GmbH**
**Elisenhof**
**Elisenstraße 3**
**80335 München (DE)**

# (54) IMPROVED POLYPROPYLENE COMPOSITION FOR INJECTION OR BLOW MOLDED ARTICLES

(57) The present invention relates to an α-nucleated propylene ethylene random copolymer composition comprising a monophasic, multimodal polypropylene ethylene random copolymer and injection or blow molded articles comprising said α-nucleated propylene ethylene random copolymer composition.

EP 4 600 277 A1

(52) Cooperative Patent Classification (CPC): (Cont.)

C-Sets
**C08F 210/06, C08F 2/001;**
**C08F 210/06, C08F 4/6465;**
**C08F 210/06, C08F 4/6492;**
**C08F 210/06, C08F 4/6546;**
**C08L 23/142, C08L 23/142;**
C08F 210/06, C08F 210/16, C08F 2500/27,
C08F 2500/12, C08F 2500/35;
C08F 210/06, C08F 210/16, C08F 2500/27,
C08F 2500/12, C08F 2500/35, C08F 2500/04,
C08F 2500/34

## Description

### Technical field

The present invention relates to an α-nucleated propylene ethylene random copolymer composition comprising a monophasic, multimodal polypropylene ethylene random copolymer and injection or blow molded articles comprising said α-nucleated propylene ethylene random copolymer composition.

### Background

Polypropylenes (PP) are widely used in molding applications, including caps and closure, thin wall packaging, houseware and similar applications.

Injection molded or blow molded parts for containers and molded articles, such as food and medical packaging, plastic cups or caps and closure have specific requirements on the polymeric materials employed to produce these articles. The materials for food and medical packaging articles should also have good organoleptic properties, and for the mass production of molded articles from PP in these different applications, it is necessary to have good processability with low cycle times and sufficient stiffness/impact balance to give firmness and integrity to the final molded article.

Good impact behavior is also essential so that the contents of the packaging remain safely contained, even if dropped. To overcome the limited charpy impact performance or to improve the drop impact performance of injection or blow molded containers, sometimes additional elastomers and/or plastomers are blended. However, the optical appearance of these articles are inferior and product quality consistency of the mixed materials used for injection or blow molded articles have limited use in microwave food containers and many household articles, bottles and cap and closure applications. In these applications a combination of high stiffness and good impact strength is required. Moreover, often also a low haze is targeted. Polymers with good optical properties, such as low haze, are desired in applications wherein is it important to the consumer to be able to see the content of the packaged goods through the packaging. Polypropylene random copolymers are widely used in such packaging applications due to their good balance of properties. The challenge, however, is to attain a composition which offers a superior balance of all these properties. The demands can be challenging, since many polymer properties are directly or indirectly interrelated, i.e. improving a specific property can only be accomplished at the expense of another property.

Peroxide treatment of PP to increase the melt flow rate for example leads to vis-broken polypropylenes having undesired organoleptic properties, such as unwanted taste and odor, and can confer an undesirable color effect (yellow color) to the final product.

There is still a need for a PP composition, particularly for wide packaging applications of injection molded articles and/or blow molded articles, having a desirable impact strength with superior hinge properties, good optical properties and/or excellent optomechanical ability.

It has now been surprisingly found that a propylene ethylene random copolymer composition comprising a monophasic propylene ethylene random copolymer being multimodal in view of at least the ethylene content and/or the weight average molecular weight Mw and with specific ranges and relations between these parameters of the polymer fractions leads to propylene ethylene random copolymer compositions having a good balance of mechanical, optical and organoleptic properties that make it especially suitable for injection molded and/or blow molded articles.

A process for producing multimodal polypropylene compositions by sequential polymerization is known from e.g., WO2019002345 A1.

### Summary of the invention

The present invention relates to an α-nucleated propylene ethylene random copolymer composition comprising a monophasic polypropylene ethylene random copolymer (R-PP) being multimodal, preferably bimodal, in view of at least the ethylene content, and comprising at least two propylene ethylene random copolymer fractions (A) and (B), wherein

- the combined amount of the two propylene ethylene random copolymer fractions (A) and (B) is at least 90 wt.-%, based on the total weight of the propylene ethylene random copolymer (R-PP),
- the weight ratio between the first propylene copolymer fraction (A) and the second propylene copolymer fraction (B) is 40:60 to 60:40,
- the ethylene content determined by quantitative $^{13}C$-NMR spectroscopy of the first propylene ethylene random copolymer fraction (A) is in the range of 2.5 to 4.0 wt.-%, preferably in the range of 2.8 to 3.6 wt.-%,
- the calculated ethylene content of the second propylene copolymer fraction (B) is in the range of 4.2 to 6.5 wt.-%, more preferably in the range of 4.4 to 6.3 wt.-%, and
- the ethylene content of the first propylene ethylene random copolymer fraction (A) is at least 1.0 wt.-%, preferably 1.0

to 5.0 wt.-%, more preferably 1.5 to 4.5 wt.-% lower than the ethylene content of the second propylene copolymer fraction (B); and

wherein the composition has an $MFR_2$ in the range of 6 to 30 g/10 min, preferably 8 to 25 g/10 min, more preferably 10 to 23 g/10 min, determined according to ISO 1133 (230 °C, 2.16 kg load).

Further, the invention relates to an α-nucleated propylene ethylene random copolymer composition comprising a monophasic polypropylene ethylene random copolymer (R-PP) being multimodal, preferably bimodal, in view of at least the weight average molecular weight Mw, and comprising at least two propylene ethylene random copolymer fractions (A) and (B), wherein

- the combined amount of the two propylene ethylene random copolymer fractions (A) and (B) is at least 90 wt.-%, based on the total weight of the propylene ethylene random copolymer (R-PP),
- the weight ratio between the first propylene copolymer fraction (A) and the second propylene copolymer fraction (B) is 40:60 to 60:40,
- the difference between the Mw of the first propylene ethylene random copolymer fraction (A) and the Mw of the propylene ethylene random copolymer composition is at least 5,000 g/mol, preferably at least 7,500 g/mol,
- the difference between the number average molecular weight Mn of the propylene ethylene random copolymer (R-PP) and the Mn of the first propylene ethylene random copolymer fraction (A) is less than 5,000 g/mol, preferably less than 4,000 g/mol,
- the molecular weight distribution MWD (Mw/Mn) determined by gel permeation chromatography according to ISO 16014-4:2003 and ASTM D 6474-99, of the R-PP is at least 5.5, preferably in the range of 6.0 to 12.0, more preferably 7.8 to 11.0, and

wherein the composition has an $MFR_2$ in the range of 6 to 30 g/10 min, preferably 8 to 25 g/10 min, more preferably 10 to 23 g/10 min, determined according to ISO 1133 (230 °C, 2.16 kg load).

The invention further relates to an injection molded article or blow molded article comprising, preferably consisting of the α-nucleated polypropylene copolymer composition as described above or below.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and aspecting the present invention, the following terminology will be used in accordance with the definitions set out below.

Unless clearly indicated otherwise, use of the terms "a", "an", and the like refers to one or more.

A propylene ethylene random copolymer, i.e. the monophasic propylene ethylene random copolymer (R-PP) according to this invention, is a copolymer consisting of propylene units and ethylene units, in which the comonomer units, i.e. the ethylene units, are distributed randomly over the polymeric chain.

Typical for monophasic propylene ethylene copolymers is the presence of only one glass transition temperature. In other words the monophasic propylene ethylene copolymer according to this invention does not comprise polymer components which are not miscible with each other as it is the case for heterophasic propylene copolymers. In contrast to monophasic systems, heterophasic systems comprise a continuous polymer phase, like a polypropylene, in which a further non-miscible polymer, like an elastomeric polymer, is dispersed as inclusions. Said polypropylene systems containing a polypropylene matrix and inclusions as a second polymer phase would by contrast be called heterophasic and is not part of the present invention. The presence of second polymer phases or the so called inclusions are for instance visible by high resolution microscopy, like electron microscopy or atomic force microscopy, or by dynamic mechanical thermal analysis (DMTA). Specifically in DMTA, the presence of a multiphase structure can be identified by the presence of at least two distinct glass transition temperatures.

A propylene ethylene random copolymer or base resin comprising more than one polymer fraction differing from each other in at least one property, such as weight average molecular weight or comonomer content, is called "multimodal". If the multimodal polyethylene composition or base resin includes two different fractions, it is called "bimodal" and, correspondingly, if it includes three different fractions, it is called "trimodal".

**Detailed Description**

The α-nucleated propylene ethylene random copolymer composition of the invention comprises a monophasic polypropylene ethylene random copolymer (R-PP).

Monophasic propylene ethylene random copolymer (R-PP)

The main component of the α-nucleated propylene ethylene random copolymer composition is a monophasic propylene-ethylene random copolymer (R-PP).

The monophasic propylene-ethylene random copolymer (R-PP) of the invention is multimodal, preferably bimodal and comprises at least two propylene ethylene random copolymer fractions (A) and (B).

While the R-PP can have further propylene ethylene random copolymer fractions, fractions (A) and (B) are the main components of the R-PP.

The combined amount of the two propylene ethylene random copolymer fractions (A) and (B) is at least 90 wt.-%, based on the total weight of the propylene ethylene random copolymer (R-PP).

Accordingly, it is preferred, that the multimodal R-PP is a bimodal R-PP, i.e. consists of the two propylene ethylene random copolymer fractions (A) and (B).

The monophasic propylene-ethylene random copolymer (R-PP) according to the invention can be produced by blend mixing of the propylene ethylene random copolymer fractions or by sequential polymerization of the propylene ethylene random copolymer fraction. In the sequential polymerization, each fraction is produced in the presence of the previous fraction, except for the first fraction.

It is preferred that the R-PP of this invention is produced by sequential polymerization.

Fractions (A) and (B) are present in the R-PP in similar amounts.

The weight ratio between the first propylene copolymer fraction (A) and the second propylene copolymer fraction (B) is in the range of 40:60 to 60:40.

In a first embodiment of the invention, the propylene-ethylene random copolymer (R-PP) is multimodal, preferably bimodal, in view of at least the ethylene content of each propylene ethylene random copolymer fraction.

In this embodiment, the ethylene content determined by quantitative $^{13}$C-NMR spectroscopy of the first propylene ethylene random copolymer fraction (A) is in the range of 2.5 to 4.0 wt.-%, preferably in the range of 2.8 to 3.6 wt.-%.

The ethylene content of the second propylene copolymer fraction (B) is in the range of 4.2 to 6.5 wt.-%, more preferably in the range of 4.4 to 6.3 wt.-%. When the fractions (A) and (B) are produced separately, the ethylene content of fraction (B) can be determined by quantitative $^{13}$C-NMR spectroscopy. In the case, that the second fraction (B) is produced in the presence of the first fraction (A) in a sequential polymerization, the ethylene content of fraction (B) can be calculated from the ethylene content of fraction (A), the total ethylene content of the R-PP and the weight percentages of each fraction. The formula for the calculation is described in the chapter measurement methods.

The ethylene content of the first propylene ethylene random copolymer fraction (A) is at least 1.0 wt.-%, preferably 1.0 to 5.0 wt.-%, more preferably 1.5 to 4.5 wt.-% lower than the ethylene content of the second propylene copolymer fraction (B).

In a second embodiment of the invention, the propylene-ethylene random copolymer (R-PP) is multimodal, preferably bimodal, in view of at least the weight average molecular weight Mw of each propylene ethylene random copolymer fraction.

In this embodiment, the difference between the Mw, determined by gel permeation chromatography according to ISO 16014-4:2003 and ASTM D 6474-99, of the first propylene ethylene random copolymer fraction (A) and the Mw of the propylene ethylene random copolymer composition (R-PP) is at least 5,000 g/mol, preferably at least 7,500 g/mol,

the difference between the number average molecular weight Mn, determined by gel permeation chromatography according to ISO 16014-4:2003 and ASTM D 6474-99, of the propylene ethylene random copolymer (R-PP) and the Mn of the first propylene ethylene random copolymer fraction (A) is less than 5,000 g/mol, preferably less than 4,000 g/mol, and

the molecular weight distribution MWD (Mw/Mn), determined by gel permeation chromatography according to ISO 16014-4:2003 and ASTM D 6474-99, of the R-PP is at least 5.5, preferably in the range of 6.0 to 12.0, more preferably 7.8 to 11.0.

In a preferred embodiment, the propylene-ethylene random copolymer (R-PP) is multimodal, preferably bimodal, in view of at least the ethylene content and the weight average molecular weight Mw of each propylene ethylene random copolymer fraction and the ethylene content and Mw of fraction (A), fraction (B) and R-PP are the same and have the same relations to each other as described in the first and second embodiment.

Further, the first propylene ethylene random copolymer fraction (A) of the monophasic propylene-ethylene random copolymer (R-PP) may have a $MFR_2$, determined according to ISO 1133 (230 °C, 2.16 kg load), of at least 5 g/10min, preferably in the range of 5.0 to 15.0 g/10min, more preferably in the range of 7.0 to 11.9 g/10min.

The second propylene ethylene random copolymer fraction (B) has preferably a $MFR_2$ of less than 40 g/10min, more preferably in the range of 10.0 to 35.0 g/10min, still more preferably in the range of 12.0 to 30.0 g/10min. For the $MFR_2$

of fraction (B), the same applies as for the ethylene content of fraction (B) as described above, i.e., that the $MFR_2$ is either determined according to ISO 1133 (230 °C, 2.16 kg load) in the case of separate production of the fractions or calculated in case of sequential polymerization.

Further, the ratio of the $MFR_2$, determined according to ISO 1133 (230 °C, 2.16 kg load), of the R-PP to the $MFR_2$ of fraction (A) is preferably more than 1.0, more preferably in the range of 1.05 to 1.90, still more preferably in the range of 1.10 to 1.80.

Accordingly, the R-PP can also be multimodal, preferably bimodal in view of the melt flow rate $MFR_2$ of each propylene ethylene random copolymer fraction.

The monophasic polypropylene ethylene random copolymer (R-PP) preferably has a xylene soluble content (XS), determined at 25 °C according to ISO 16152, of not less than 5.5 wt.-%, preferably in the range from 6.0 to 10.0 wt.-%, more preferably in the range from 6.5 to 9.0 wt.-%.

It is preferred that the first propylene ethylene random copolymer fraction (A) has a xylene soluble content (XS), determined at 25 °C according to ISO 16152, of not more than 7.0 wt.%, more preferably not more than 6.5 wt.%, more preferably of from 4.0 to 6.5 wt.%.

Also, it is preferred that the second propylene ethylene random copolymer fraction (B) has a xylene soluble content (XS) of 7.0 to 12.0 wt.%. In correspondence with the ethylene content and $MFR_2$ of fraction (B), the xylene soluble content (XS) can either be determined at 25 °C according to ISO 16152 in the case of separate production of the fractions or calculated from a xylene soluble content (XS) of fraction (A) and the total xylene soluble content (XS) of the R-PP in case of sequential polymerization.

Accordingly, the R-PP can also be multimodal, preferably bimodal in view of the xylene soluble content (XS) of each propylene ethylene random copolymer fraction.

The ethylene content of the monophasic propylene-ethylene random copolymer (R-PP), determined by quantitative $^{13}C$ NMR spectroscopy, is preferably in the range of 2.5 to 5.0 wt.-%, preferably 3.0 to 4.8 wt.-%, based on the total weight of the monophasic propylene-ethylene random copolymer (R-PP).

The monophasic propylene-ethylene random copolymer (R-PP) can be produced by polymerization in the presence of any conventional coordination catalyst including Ziegler-Natta, chromium and single site, such as metallocene, catalysts. It is preferred that the R-PP is produced in the presence of a Ziegler-Natta catalyst.

Accordingly, it is preferred that the monophasic propylene-ethylene random copolymer (R-PP) has 2,1-regiodefects, measured by quantitative $^{13}C$-NMR, of less than 0.4 mol-%, preferably 0.0 to 0.2 mol-%, still more preferably is free from 2,1-regiodefects, i.e. no 2,1-regiodefects are detectable.

The term "2,1 regio defects" as used in the present invention defines the sum of 2,1 erythro regio-defects and 2,1 threo regio-defects.

The low amount and the absence, respectively, of 2,1-regiodefects in a monophasic propylene-ethylene random copolymer (R-PP) is indicative that the monophasic random propylene-ethylene copolymer (R-PP) has been polymerized in the presence of a Ziegler-Natta catalyst system (ZN).

Preferably, the monophasic propylene ethylene random copolymer (R-PP) is non-visbroken, more preferably is a reactor-made monophasic propylene ethylene random copolymer; and/or does not contain peroxide(s) or decomposition products of peroxide(s).

Since there is no need for a visbreaking step, the organoleptic properties of the inventive composition can be improved.

The $\alpha$-nucleated propylene ethylene random copolymer composition may comprise further (polymer) components.

However, the monophasic propylene ethylene random copolymer (R-PP) as described above is the main component of the inventive $\alpha$-nucleated propylene ethylene random copolymer composition.

Accordingly, it is preferred that the amount of the monophasic propylene ethylene random copolymer (R-PP) is more than 85 wt.-%, preferably in the range of 90 to 99.9 wt.-%, more preferably in the range of 95 to 99.9 wt.-%, based on the total weight of the propylene ethylene random copolymer composition.

Nucleating Agents

Besides the monophasic propylene ethylene random copolymer (R-PP), the composition can further comprise nucleating agents.

Preferably, the composition comprises a first nucleating agent (NU1), wherein the first nucleating agent (NU1) is a sorbitol-derivative having a structure of formula I-a or a nonitol-derivative having a structure of formula I-b, or combinations thereof:

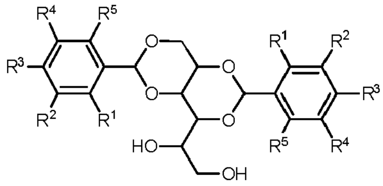

(I-a)

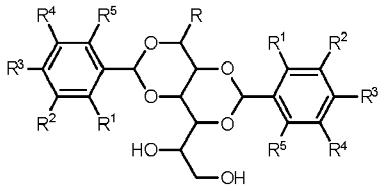

(I-b)

wherein R is selected from $C_2$ to $C_6$ alkyl groups;

wherein $R^1$ to $R^5$ are independently selected from the group consisting of hydrogen, alkyl, alkenyl, alkynyl, alkoxy, aryloxy, hydroxyalkyl, cycloalkyl, cycloalkenyl, aryl, substituted aryl, halide, amino and thioether and combinations thereof, and optionally any adjacent $R^1$ to $R^5$ are linked together to form a 5-membered or 6-membered ring.

Particularly preferred examples of the first nucleating agent (NU1) include the group consisting of 1,3:2,4 Dibenzylidene sorbitol (DBS), 1,3:2,4 Di(methylbenzylidene) sorbitol (MDBS), 1,3:2,4 Bis(3,4-dimethylbenzylidene) sorbitol (DMDBS) or 1,2,3-trideoxy-4,6:5,7-bis-0-((4-propylphenyl) methylene) nonitol, or combinations thereof.

Even more preferably is the first nucleating agent (NU1) 1,3:2,4 Bis(3,4-dimethylbenzylidene) sorbitol (DMDBS).

In embodiments, in which a first nucleating agent (NU1) is present in the composition, it is preferred, that the composition comprises the nucleating agent (NU1) being a sorbitol-derivative having a structure of formula I-a or a nonitol-derivative having a structure of formula I-b, or combinations thereof in an amount in the range of 0.0500 to 0.3500 wt.-%, preferably from 0.0500 to 0.2200 wt.-%, based on the total weight of the propylene ethylene random copolymer composition.

In addition to the first nucleating agent (NU1), the composition can further comprise a second nucleating agent (NU2).

Preferably, the nucleating agent (NU2) comprises the salt of a bridged or unbridged cyclohexane dicarboxylic acid derivative represented by Formula (II-a) or (II-b):

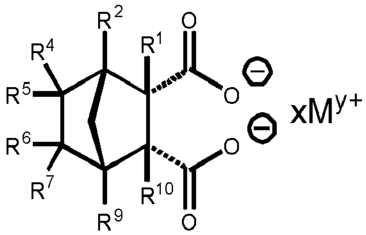

(II-a)

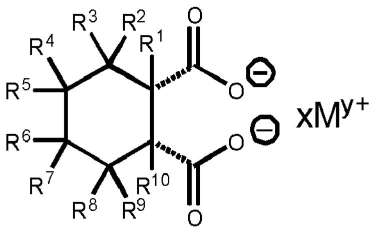

(II-b),

wherein x is either 1 or 2, y is either 1 or 2, x*y is 2, and wherein for y = 1, M is an alkali metal, and for y=2, M is an alkaline earth metal; and wherein $R^1$ to $R^{10}$ are independently a hydrogen atom, an alkyl group having 1 to 9 carbon atoms, a hydroxyl group, an alkoxy group having 1 to 9 carbon atoms, an amino group, an alkylamine group having 1 to 9 carbon atoms, a halogen atom, a phenyl group, or a group represented by the formula $R\text{-}(R'\text{-}O)_n\text{-}$, R being an alkyl group having 1 to 3 carbon atoms, R' being an alkylene group having 2 or 3 carbon atoms, and n being an integer of 1 to 4; and any two alkyl groups of $R^1$ to $R^{10}$ may be linked to each other, thereby forming a carbon ring having 3 to 6 carbon atoms.

In order to equalize the negative charge of the dicarboxylate, x*y has to be 2 in the counter ion $xM^{y+}$.

Alkali metals can be used for M when y= 1 and alkaline earth metals for M when y=2.

Preferred alkali metals are lithium, sodium and potassium, more preferred sodium in Formula (II-a).

Preferred alkaline earth metals are magnesium, calcium, strontium, and barium, more preferred calcium in Formula (II-b).

It is preferred that the nucleating agent (NU2) comprises the salt of an unbridged cyclohexane dicarboxylic acid represented by Formula (II-b).

The counter ion $xM^{y+}$ is preferably the ion of an alkaline earth metal. It is therefore preferred that x is 1 and y is 2 in Formula (II-a) or Formula (II-b).

It is preferred, that the counter ion $xM^{y+}$ is selected from the alkaline earth metals magnesium, calcium, strontium, or barium, most preferably is calcium.

Preferably, all $R^1$ to $R^{10}$ are hydrogen atoms.

In a preferred embodiment, the nucleating agent (NU2) comprises an alkaline earth metal salt, more preferably the calcium salt of cis-1,2-cyclohexanedicarboxylic acid represented by Formula (III)

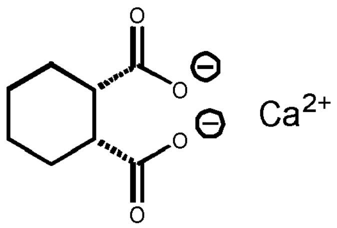

(III).

It is further preferred, that the nucleating agent (NU2) comprises the salt of a bridged or unbridged cyclohexane dicarboxylic acid as the major component. Therefore it is preferred that the nucleating agent (NU2) comprises the salt of a bridged or unbridged cyclohexane dicarboxylic acid represented by Formula (II-a) or (II-b) in an amount of ≥ 50 wt.-%, more preferably in the range of 50 to 100 wt.-%, even more preferably in the range of 50 to 80 wt.-%, based on the total weight of the nucleating agent (NU2).

In certain embodiments of the invention, the nucleating agent (NU2) further comprises a metal stearate, like zinc stearate, in an amount of ≤ 50 wt.-%, preferably in the range of 20 to 45 wt.-%, more preferably in the range of 25 to 40 wt.-%, based on the total weight of the nucleating agent (NU2).

The nucleating agent (NU2) according to the invention comprising the salt of a bridged or unbridged cyclohexane dicarboxylic acid represented by Formula (II-a) or (II-b) may be the commercial nucleating agent HPN600ei available from Milliken containing the calcium salt of cis-1,2-cyclohexanedicarboxylic acid as the main component in ≥ 50 wt.-% and zinc stearate as a side component in ≤ 40 wt.-%.

In embodiments, in which the second nucleating agent (NU2) is present in the composition, it is preferred, that the composition comprises the nucleating agent (NU2) comprising the salt of a bridged or unbridged cyclohexane dicarboxylic acid represented by Formula (II-a) or (II-b) in an amount in the range of 0.0010 to 0.1000 wt.-%, more preferably 0.0010 to 0.0500 wt.-%, even more preferably 0.0010 to 0.0250 wt.-%, based on the total weight of the propylene ethylene random copolymer composition.

The propylene ethylene random copolymer composition may comprise further nucleating agents. However, it is preferred that in embodiments in which nucleating agents are present in the composition that the propylene ethylene random copolymer composition does not comprise further nucleating agents other than NU1 and optionally NU2.

The combined amount of the propylene ethylene random copolymer (R-PP) and the nucleating agents (NU) is preferably more than 90 wt.-%, more preferably in the range of 95.0 to 99.9 wt.-%, even more preferably in the range of 97.0 to 99.9 wt.-%, based on the total weight of the propylene ethylene random copolymer composition.

α-Nucleated propylene ethylene random copolymer composition

To obtain especially good results, the inventive composition may have one or more of the following characteristics.

It is preferred that not only the propylene ethylene random copolymer (R-PP) is monophasic but also that the propylene ethylene random copolymer composition is monophasic.

The composition of the invention has a melt flow rate $MFR_2$ (230 °C) measured according to ISO 1133 in the range of 6 to 30 g/10 min, preferably 8 to 25 g/10 min, more preferably 10.0 to 23.0 g/10 min.

It is preferred that the ethylene content of the α-nucleated propylene ethylene random copolymer composition, determined by quantitative $^{13}C$ NMR spectroscopy, is in the range of 2.5 to 5.0 wt.-%, more preferably 3.0 to 4.8 wt.-%, based on the total weight of the composition.

Also, the amount of the propylene ethylene random copolymer (R-PP) in the α-nucleated propylene ethylene random copolymer composition is preferably more than 85 wt.-%, more preferably in the range of 90 to 99.9 wt.-%, still more preferably in the range of 95 to 99.9 wt.-%, based on the total weight of the propylene ethylene random copolymer composition.

Preferably, the xylene soluble content (XS) of the composition, determined at 25 °C according to ISO 16152, is in the range of of not less than 5.5 wt.-%, preferably in the range from 6.0 to 10.0 wt.-%, more preferably in the range from 6.5 to 9.0 wt.-%

The composition preferably has a crystallization temperature Tc determined by differential scanning calorimetry

(DSC) of at least 110° C, preferably in the range of 115 °C to 125 °C.

The melting temperature Tm determined by differential scanning calorimetry (DSC) of the composition is preferably in the range of 140 °C to 150 °C.

The α-nucleated propylene ethylene random copolymer composition according to the invention preferably has one or more of the following mechanical and optical properties.

The composition has preferably a haze value, determined according to ASTM D 1003-07 on 60 × 60 $mm^2$ plaques with a thickness of 2 mm prepared at 200 °C according to ISO19069-2, of less than 40%, preferably less than 30% more preferably in the range of 1 to 29%.

Further, it is preferred that the Charpy notched impact strength (NIS) at +23 °C, as determined according to ISO 179 using 80×10×4 $mm^3$ test bars injection-moulded in line with ISO 19069-2, is in the range of 6.0 to 9.0 kJ/$m^2$, more preferably in the range of 6.5 to 8.5 kJ/$m^2$.

The composition preferably has a tensile modulus, determined according to ISO 527-1,-2 at 1 mm/min and 23°C, of not more than 1200 MPa, preferably in the range of 750 MPa to 1200 MPa.

Further, the composition has preferably a flexural modulus determined according to ISO 178 in the range of 800 to 1250 MPa.

A good balance between properties is often times advantageous.

The composition of this invention possesses a good balance between mechanical and optical properties that can be demonstrated by putting the following properties of the composition into relation with each other.

Accordingly, it is preferred that the properties of the composition fulfill one or more, or all of the following relations.

Preferably, the composition has an optomechanical ability (OMA) determined according to the following equation

$$OMA = \frac{Flexural\ Modulus\ [\mathrm{MPa}]\ \ x\ \ NIS\ [\mathrm{kJ\ m^{-2}}]}{Haze\ [\%]}$$

of at least 190 MPa kJ $\%^{-1}$ $m^{-2}$, more preferably in the range of 200 to 500 MPa kJ $\%^{-1}$ $m^{-2}$;
wherein the flexural modulus was determined according to ISO 178, the NIS at +23 °C determined according to ISO 179 using 80×10×4 $mm^3$ test bars injection-moulded in line with ISO 19069-2, and the haze value determined according to ASTM D 1003-07 on 60 × 60 $mm^2$ plaques with a thickness of 2 mm prepared at 200 °C according to ISO 19069-2.

It is also preferred, that the ratio ( $\frac{Tensile\ modulus}{NIS}$ ) of the tensile modulus to the Charpy notched impact strength at 23 °C, determined according to ISO 179 using 80×10×4 $mm^3$ test bars injection-moulded in line with ISO 19069-2, is in the range of 75 to 175 MPa $m^2$ / kJ, more preferably in the range of 85 to 165 MPa $m^2$ / kJ, most preferably in the range of 100 to 160 MPa $m^2$ / kJ.

Further, the composition preferably has a weighted impact haze (WIH) determined according to the following equation

$$WIH = \frac{NIS^2}{Haze\ (2\ mm, 200°C)}$$

of at least 1.3 $kJ^2$ $\%^{-1}$ $m^{-4}$, preferably in the range of 1.5 to 5.0 $kJ^2$ $\%^{-1}$ $m^4$;
wherein the NIS at +23 °C was determined according to ISO 179 using 80×10×4 $mm^3$ test bars injection-moulded in line with ISO 19069-2, and the haze value was determined according to ASTM D 1003-07 on 60 × 60 $mm^2$ plaques with a thickness of 2 mm prepared at 200 °C according to ISO19069-2.

It is also preferred that the composition has a ratio between Haze (2 mm, 200°C) and Charpy Notched Impact Strength at +23°C ( $\frac{Haze}{NIS}$ ) of at most 6.0 % $m^2$ $kJ^{-1}$, preferably in the range of 1.5 to 4.5 % $m^2$ $kJ^{-1}$.

The individual components used for the inventive α-nucleated propylene ethylene random copolymer composition are known by the person skilled in the art and thus can be readily produced by the information provided herein.

The α-nucleated propylene ethylene random copolymer comprising at least two propylene ethylene random copolymer fractions (A) and (B) can be produced by blend mixing the two fractions or by sequential polymerization of the fractions, where each fraction is produced in the presence of the previous fractions except for the first fraction (A).

In the following a non-limiting example of the preparation for the inventive α-nucleated propylene ethylene random copolymer composition is described in more detail. The conditions used in each reactor of the following sequential polymerization of the α-nucleated propylene ethylene random copolymer (R-PP) can also be used to produce the propylene ethylene random copolymer fractions separately and blend them subsequently to obtain the α-nucleated

propylene ethylene random copolymer (R-PP).

Propylene and optional ethylene are polymerized in the presence of a Ziegler-Natta catalyst in a pre-polymerization reactor. This pre-polymerized catalyst composition is then used in the preparation of the propylene ethylene random copolymer. Fraction (A) is prepared by polymerizing, in a slurry reactor, for example a loop reactor, propylene together with the ethylene comonomer in the presence of the prepolymerized Ziegler-Natta catalyst composition. However polymerization of fraction (A) can be achieved in the slurry reactor without applying any prepolymerzation setup. Accordingly, the first propylene ethylene random copolymer fraction (A) is the polymer obtained after the slurry reactor including the pre-polymerized catalyst.

This fraction (A) is then transferred to a subsequent gas phase reactor, wherein in the gas phase reactor propylene is reacted in the presence of ethylene in order to produce the propylene ethylene random copolymer fraction (B) in the presence of the propylene ethylene random copolymer fraction (A). This reaction sequence provides a reactor blend of fraction (A) and fraction (B) constituting the monophasic propylene ethylene random copolymer (R-PP). The above-discussed process, comprising at least two polymerization steps, is advantageous in view of the fact that it provides easily controllable reaction steps enabling the preparation of a desired reactor blend. The polymerization steps may be adjusted, for example by appropriately selecting monomer feed, comonomer feed, hydrogen feed, temperature and pressure in order to suitably adjust the properties of the polymerization products obtained. It is in particular possible to obtain a multimodality, preferably the bimodality, of the propylene ethylene random copolymer with respect to the ethylene distribution as well as with respect to the molecular weights and $MFR_2$ (230 °C) values during said multistage polymerization procedures.

Such a process can be carried out using any suitable catalyst for the preparation of the monophasic propylene ethylene random copolymer (R-PP). Preferably, the process as discussed above is carried out using a Ziegler-Natta catalyst, in particular a high yield Ziegler-Natta catalyst (so-called fourth and fifth generation type to differentiate from low yield, so called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl based compound. Suitable catalysts are in particular disclosed in US 5,234,879, WO 92/19653, WO 92/19658 WO 99/33843, WO2016/066446 A and WO2015/117948.

Suitable external donors are the known silane-based donors, such as dicyclopentyl dimethoxy silane or cyclohexyl methyldimethoxy silane.

The described process can be for example a loop-gas phase process, such as developed by Borealis, known as Borstar® technology, described for example in EP 0 887 379 A1 and WO 92/12182.

With respect to the above-mentioned preferred slurry-gas phase process, the following general information can be provided with respect to the process conditions.

Temperature of from 40 to 110 °C, preferably between 60 and 100 °C, in particular between 65 and 90 °C, with a pressure in the range of from 20 to 80 barg, preferably 30 to 60 barg, with the option of adding hydrogen in order to control the molecular weight. The reaction product of the slurry polymerization, which preferably is carried out in a loop reactor, is then transferred to the subsequent gas phase reactor, wherein the temperature preferably is within the range of from 50 to 130 °C, more preferably 80 to 100 °C, at a pressure in the range of from 5 to 50 barg, preferably 15 to 35 barg, again with the option of adding hydrogen in order to control the molecular weight.

The residence time can vary in the reactor zones identified above. In embodiments, the residence time in the slurry reaction, for example the loop reactor, is in the range of from 0.5 to 5 hours, for example 0.5 to 2 hours, while the residence time in the gas phase reactor generally will be from 1 to 8 hours.

The properties of the monophasic propylene ethylene random copolymer (R-PP) produced with the above-outlined process may be adjusted and controlled with the process conditions as known to the skilled person, for example by one or more of the following process parameters: temperature, hydrogen feed, comonomer feed, propylene feed, catalyst, type and amount of external donor, split between two or more components of a multimodal polymer.

The monophasic propylene ethylene random copolymer (R-PP) obtained in a process as described above, can subsequently be compounded with nucleating agents, e.g. the with the nucleating agent (NU1) or with NU1 and NU2, and other additives in order to obtain the inventive α-nucleated propylene ethylene random copolymer composition comprising the multimodal R-PP.

Injection or blow molded article

The α-nucleated propylene ethylene random copolymer composition described above has excellent properties to be used in injection molding articles and/or blow molded articles. Accordingly, the present invention is directed to injection molded articles and/or blow molded articles comprising, preferably consisting of the α-nucleated propylene ethylene random copolymer composition described above.

While the injection molded or blow molded article may comprise other components, the article preferably comprises at least 80 wt- %, more preferably at least 90 wt.-%, yet more preferably at least 95 wt.-%, still more preferably consists of the $\alpha$-nucleated propylene ethylene random copolymer composition as described above.

Due to the excellent mechanical, optical and organoleptic properties of the inventive propylene ethylene random copolymer composition, it can be injection or blow molded into packaging elements such as packaging container, houseware boxes, caps, closure parts and blow molded bottles.

Further examples of suitable molded articles are cups, boxes, trays, pails, buckets, bowls, lids, flaps.

Further, preferred packaging elements are selected from the group consisting of cups, boxes, trays, pails, buckets, bowls, lids, flaps, caps, CD covers, and DVD covers.

A container according to the invention has preferably a wall thickness of 4.0 mm or less. More preferably, the wall thickness of the container is 3.7 mm or less, still more preferably 3.5 mm or less. The lower limit is preferably 0.2 mm. Preferably, the wall thickness of the container is within the range of 0.3 to 3.5 mm, more preferably 0.4 to 3.2 mm, most preferably 0.4 to 3.0 mm.

Other packaging elements, like ISBM bottles, caps and closure parts produced by injection molding or blow molding, preferably have a thickness of equal or below 5.0 mm, preferably in the range of 0.3 to 4.0 mm.

**Measuring methods:**

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

**The xylene soluble fraction at room temperature (XS, wt.-%)**

The amount of the polymer soluble in xylene is determined at 25 °C according to ISO 16152; 5$^{th}$ edition; 2005-07-01.

**DSC analysis, melting temperature ($T_m$) and crystallization temperature ($T_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of 0 to +225°C. Crystallization temperature ($T_c$) is determined from the cooling step, while melting temperature ($T_m$) is determined from the second heating step.

**Flexural Modulus**

The Flexural properties are determined according to ISO 178 method A (3-point bending test) on 80 mm $\times$ 10 mm $\times$ 4 mm specimens. Following the standard, a test speed of 2 mm/min and a span length of 16 times the thickness was used. The testing temperature was 23$\pm$2 ° C. Injection molding was carried out according to ISO 19069-2 using a melt temperature of 230 °C for all materials irrespective of material melt flow rate.

**Tensile Modulus**

The tensile properties are determined on injection moulded dogbone specimens prepared in accordance with ISO 527-2 using a melt temperature of 230 °C. Tensile modulus was determined according to ISO 527-1,-2 at 1 mm/min and 23°C. To determine stress at yield and strain at yield, a speed of 50 mm/min. was used.

**Notched impact strength (NIS)**

The Charpy notched impact strength (NIS) was measured according to ISO 179 1eA at +23°C, using injection moulded bar test specimens of 80$\times$10$\times$4 mm$^3$ prepared in accordance with ISO 19069-2 using a melt temperature of 230 °C for all materials irrespective of material melt flow rate.

**Number average molecular weight ($M_n$), weight average molecular weight ($M_w$), and molecular weight distribution (MWD)**

Molecular weight averages (Mw, Mn), and the molecular weight distribution (MWD), i.e. the Mw/Mn (wherein Mn is the number average molecular weight, Mw is the weight average molecular weight), were determined by Gel Permeation

Chromatography (GPC) according to ISO 16014-4:2003 and ASTM D 6474-99. A PolymerChar GPC instrument, equipped with infrared (IR) detector was used with 3 x Olexis and lx Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 µl. of sample solution were injected per analysis. The column set was calibrated using universal calibration (according to ISO 16014-2:2003) with at least 15 narrow MWD polystyrene (PS) standards in the range from 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument.

**Quantification of microstructure by NMR spectroscopy**

Quantitative nuclear-magnetic resonance (NMR) spectroscopy was used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimized 10 mm extended temperature probe head at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bilevel WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\,\% = 100 * (\ mmmm\ /\ \text{sum of all pentads}\ )$$

The presence of 2,1 erythro regio defects was indicated by the presence of the two methyl sites at 17.7 and 17.2 ppm and confirmed by other characteristic sites. Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = (\ I_{e6} + I_{e8}\ ) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\ mol\% = 100 * ( P_{21e} / P_{total} )$$

For copolymers characteristic signals corresponding to the incorporation of ethylene were observed (Cheng, H. N., Macromolecules 17 (1984), 1950).

With regio defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the influence of such defects on the comonomer content was required.

The comonomer fraction was quantified using the method of Wang et. al. (Wang, W-J., Zhu, S., Macromolecules 33 (2000), 1157) through integration of multiple signals across the whole spectral region in the $^{13}C\{^{1}H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**Calculation** of comonomer content of the second propylene-ethylene random copolymer fraction (B):

$$\frac{C2\ \ (R-PP) - w(PP1) \times C2(PP1)}{w(PP2)} = C2(PP2)$$

wherein

| | |
|---|---|
| w(PP1) | is the weight fraction [split wt%] of the first propylene-ethylene random copolymer fraction (A), |
| w(PP2) | is the weight fraction [split wt %] of second propylene-ethylene random copolymer fraction (B), |

C2(PP1) is the comonomer content [in wt-%] of the first propylene-ethylene random copolymer fraction (A),
C2(R-PP) is the comonomer content [in wt-%] of the monophasic propyleneethylene random copolymer (R-PP),
C2(PP2) is the calculated comonomer content [in wt-%] of the second propylene-ethylene random copolymer fraction (B).

**Calculation** of the XS content of the second propylene-ethylene random copolymer fraction (B):

$$\frac{XS\,(R-PP) - w(PP1) \times XS\,(PP1)}{w(PP2)} = XS(PP2)$$

wherein

w(PP1) is the weight fraction [split wt%] of the first propylene-ethylene random copolymer fraction (A),
w(PP2) is the weight fraction [split wt %] of second propylene-ethylene random copolymer fraction (B),
XS(PP1) is the xylene soluble (XS) content [in wt-%] of the first propyleneethylene random copolymer fraction (A),
XS(R-PP) is the xylene soluble (XS) content [in wt-%] of the monophasic propylene-ethylene random copolymer (R-PP),
XS(PP2) is the calculated xylene soluble (XS) content [in wt-%] of the second propylene-ethylene random copolymer fraction (B).

**Calculation** of the $MFR_2$ of the second propylene-ethylene random copolymer fraction (B):

$$10^{\frac{\log(MFR_2\,(R-PP)) - w(PP1) \times \log(MFR_2(PP1))}{w(PP\ \ )}} = MFR_2(PP2)$$

w(PP1) is the weight fraction [split wt%] of the first propylene-ethylene random copolymer fraction (A),
w(PP2) is the weight fraction [split wt %] of second propylene-ethylene random copolymer fraction (B),
$MFR_2$(PP1) is the $MFR_2$ [in g/10 min] of the first propylene-ethylene random copolymer fraction (A),
$MFR_2$(R-PP) is the $MFR_2$ [in g/10 min] of the monophasic propylene-ethylene random copolymer (R-PP),
$MFR_2$(PP2) is the calculated $MFR_2$ [in g/10 min] of the second propylene-ethylene random copolymer fraction (B).

**Haze** was determined according to ASTM D1003-07 on plaques with dimensions $60\times60\times2$ $mm^3$ from injection-molded plaques prepared at 200 °C according to ISO 19069-2.

**Preparation of the Examples**

The compositions CE, IE1 and IE2 have been produced in a two-step polymerization process starting in a prepolymerization reactor, followed by polymerization in a bulk-phase loop reactor, again followed by polymerization in a gas phase reactor, varying the molecular weight and ethylene content by appropriate hydrogen and comonomer feeds. The catalyst used in the polymerization process for CE1, IE1 and IE2 was the phthalate-free Ziegler-Natta type catalyst used in the inventive examples of WO2015/117948 A1, with triethyl-aluminium (TEAL) as co-catalyst and dicyclopentyl dimethoxy silane (donor "D") as donor.

The aluminium to titanium ratio, the aluminium to donor ratio and the polymerization conditions are indicated in table 1.

The prepolymerization with propylene was performed in a stirred tank reactor in liquid phase. Following a transfer to the loop reactor, the first copolymer fraction (A) was produced with the parameters in the respective part of table 1 under Loop reactor, then the polymer was again transferred to the gas phase reactor (GPR 1) and the second copolymer fraction (B) was produced with the parameters in the respective part of table 1.

**Table 1:** Polymerization conditions.

| | **CE1** | **IE1** | **IE2** |
|---|---|---|---|
| **Pre-polymerization** | | | |
| TEAL/Ti (mol/mol) | 150 | 150 | 150 |
| TEAL/Donor (mol/mol) | 3 | 3 | 3 |

(continued)

| | CE1 | IE1 | IE2 |
|---|---|---|---|
| **Pre-polymerization** | | | |
| Temp. (°C) | 25 | 25 | 25 |
| Press. (barg) | 66 | 66 | 66 |
| Donor/$C_3$ (g/ton) | 50 | 50 | 50 |
| TEAL/$C_3$ flow (g/ton) | 130 | 130 | 130 |
| **Loop reactor** | | | |
| Temp. (°C) | 70 | 70 | 70 |
| Press. (barg) | 55 | 55 | 55 |
| $H_2/C_3$ (mol/kmol) | 4.2 | 3.2 | 3.4 |
| $C_2$/production (kg/ton) | 29 | 35 | 32 |
| Split (wt.-%) | 45 | 46.3 | 48 |
| $MFR_2$ (g/10min) | 12 | 9.0 | 10.5 |
| $C_2$ content (wt.-%) C2(PP1) | 2.8 | 3.1 | 3.0 |
| XS (wt.-%) | 5.0 | 6.1 | 5.7 |
| **GPR 1** | | | |
| Temp. (°C) | 85 | 85 | 85 |
| Press. (barg) | 22 | 22 | 22 |
| $H_2/C_3$ (mol/kmol) | 30 | 34 | 35 |
| $C_2/C_3$ (mol/kmol) | 19.5 | | 24 |
| Split (wt.-%) | 55 | 53.7 | 52 |
| C2 content in GPR1 fraction (wt.% - calculated) C2(PP2) | 4.1 | 5.5 | 5.1 |
| C2(PP2) - C2 (PP1) (wt%) | 1.3 | 2.4 | 2.1 |
| | | | |
| **Polymer powder (R-PP)** | | | |
| $MFR_2$ (g/10min) | 12 | 12.5 | 14 |
| C2 content (wt.-%) | 3.5 | 4.4 | 4.1 |
| XS (wt.-%) | 6.0 | 7.6 | 7.1 |
| 2,1-regio-defects | 0 | 0 | 0 |
| Mn (g/mol) | 30,000 | 28,800 | 28,400 |
| Mw (g/mol) | 229,000 | 239,650 | 227,000 |
| MWD (Mw/Mn) | 7.6 | 8.3 | 8.0 |

Table 2 shows measured and calculated properties of the two polymer fractions (A) and (B) that demonstrate the specific bimodality of the R-PP for the inventive examples.

**Table 2:** Properties of fractions (A) and (B) of the R-PP powders.

| | CE1 | IE1 | IE2 |
|---|---|---|---|
| **PP copolymer Loop fraction (fraction A)** | | | |
| $MFR_2$ (g/10min) | 12.0 | 9.0 | 10.5 |
| C2 content (wt.%) | 2.8 | 3.1 | 3.0 |

(continued)

| | CE1 | IE1 | IE2 |
|---|---|---|---|
| **PP copolymer Loop fraction (fraction A)** | | | |
| XS (wt.%) | 4.9 | 6.1 | 5.7 |
| $T_m$ (°C) | 145.7 | 145.9 | 146.1 |
| Mn (g/mol) | 21,500 | 28,150 | 28,000 |
| Mw (g/mol) | 224,600 | 253,900 | 249,000 |
| MWD (Mw/Mn) | 10.4 | 9.0 | 8.9 |
| **PP copolymer GPR fraction (fraction B)** | | | |
| $MFR_2$ (g/10min) - calculated | 12 | 16.6 | 18.3 |
| C2 content in GPR1 fraction (wt.-%) - calculated | 4.1 | 5.5 | 5.1 |
| XS (wt.-%) - calculated | 6.9 | 8.9 | 8.4 |
| **Relations of fraction A to R-PP** | | | |
| $MFR_2$ of R-PP/$MFR_2$ of fraction A | 1.00 | 1.39 | 1.33 |
| C2 of R-PP / C2 of fraction A | 1.25 | 1.42 | 1.37 |

The polypropylene resins (R-PP powder) of Inventive Examples IE1 and IE2 and Comparative Example CE1 emerging from the GPR1 were compounded together with a combination of Irganox 1010 (Pentaerythrityl-tetrakis(3-(3',5'-di-tert. butyl-4-hydroxyphenyl)-propionate, CAS-no. 6683-19-8), Irgafos 168 (Tris (2,4-di-t-butylphenyl) phosphate, CAS-no. 31570-04-4), Calcium stearate (supplied by Croda Polymer Additives, CAS-no. 1592-23-0), Zinc stearate (CAS no. 557-05-1), GMS95 Tris (Glyceryl Monostearate), DMDBS (Millad 3988, 1,3 : 2,4 Bis(3,4-dimethylbenzylidene) sorbitol, CAS- no. 135861 -56-2, supplied by Milliken) and for IE2 additionally with the nucleating agent HPN600ei containing calcium salt of cis-1,2-cyclohexanedicarboxylic acid and zinc stearate (supplied by Milliken) as shown in table 3 and pelletized in a W&P ZSK 70 twin-screw extruder (Coperion) at a melt temperature of 225°C.

**Table 3**: Weight percentages of additives and PP-powder in the compositions.

| | CE1 | IE1 | IE2 |
|---|---|---|---|
| PP-powder | 99.6200 | 99.6100 | 99.6000 |
| Irganox 1010 | 0.0500 | 0.0320 | 0.0320 |
| Irgafos 168 | 0.0500 | 0.0630 | 0.0630 |
| Calcium Stearate | 0.0500 | 0 | 0 |
| Zinc Stearate | 0 | 0.0500 | 0.0500 |
| GMS95 | 0.0500 | 0.0400 | 0.0400 |
| DMDBS | 0.1800 | 0.2050 | 0.2050 |
| HPN600ei | 0 | 0 | 0.0100 |

CE2 is SRM100NC, a propylene ethylene random copolymer composition commercially available from Reliance Industries Limited, India (PP Product SRM100NC) and was evaluated versus both comparative and inventive examples. The physical properties of the compositions CE1, IE1 and IE2 after the compounding step and of the commercial CE2 are shown in table 4.

**Table 4:** Physical properties of the resulting compositions.

| | CE1 | CE2 | IE1 | IE2 |
|---|---|---|---|---|
| $MFR_2$ (g/10min) | 12 | 12.2 | 12.5 | 14 |
| $C_2$ content (wt.%) | 3.5 | 3.5 | 4.4 | 4.1 |

(continued)

| | CE1 | CE2 | IE1 | IE2 |
|---|---|---|---|---|
| XS (wt.%) | 6.0 | 5.8 | 7.6 | 7.1 |
| $T_m$ (°C) | 148.9 | 149.1 | 146.3 | 146.5 |
| $T_c$ (°C) | 120.2 | 120.2 | 118.6 | 118.9 |
| Mn (g/mol) | 30,000 | 30,750 | 28,800 | 28,400 |
| Mw (g/mol) | 229,000 | 236,300 | 239,650 | 227,000 |
| MWD (Mw/Mn) | 7.6 | 7.7 | 8.3 | 8.0 |

Table 5 shows the mechanical and optical properties of the compositions and the relations between certain properties.

**Table 5:** Mechanical and optical properties of the inventive examples and comparative examples.

| Properties | CE1 | CE2 | IE1 | IE2 |
|---|---|---|---|---|
| Tensile modulus [MPa] | 1050 | 1100 | 950 | 975 |
| Charpy notched impact strength 23°C [kJ/m²] (NIS) | 5.9 | 6.0 | 7.2 | 6.7 |
| $\frac{Tensile\ modulus}{NIS}\ [\frac{MPa\ m^2}{kJ}]$ | 178 | 183 | 131.9 | 145.5 |
| Flexural modulus [MPa] | 1100 | 1120 | 980 | 1000 |
| Haze -2.0 mm test sample [%] | 50.5 | 36.4 | 22.5 | 24.1 |
| OMA = Flex Modulus* NIS/ Haze [MPa kJ/m² / %] | 128 | 184 | 313 | 278 |
| Ratio (Haze/NIS) [%/kJ/m²] | 8.5 | 6.1 | 3.1 | 3.6 |
| Weighted impact-haze WIH: $NIS^2$/Haze [$(kJ^2\ \%^{-1}\ m^{-4}$] | 0.69 | 0.99 | 2.30 | 1.86 |

Table 5 demonstrates that the NIS and the haze of IE1 and IE2 are superior to the comparative examples CE1 and CE2 while having a similar tensile and flexural modulus and that the optomechanical ability (OMA) as well as the weighted impact haze (WIH) are more than 50% higher.

## Claims

**1.** An α-nucleated propylene ethylene random copolymer composition comprising a monophasic polypropylene ethylene random copolymer (R-PP) being multimodal, preferably bimodal, in view of at least the ethylene content, and comprising at least two propylene ethylene random copolymer fractions (A) and (B), wherein

- the combined amount of the two propylene ethylene random copolymer fractions (A) and (B) is at least 90 wt.-%, based on the total weight of the propylene ethylene random copolymer (R-PP),
- the weight ratio between the first propylene copolymer fraction (A) and the second propylene copolymer fraction (B) is in the range of 40:60 to 60:40,
- the ethylene content, determined by quantitative $^{13}C$-NMR spectroscopy of the first propylene ethylene random copolymer fraction (A) is in the range of 2.5 to 4.0 wt.-%, preferably in the range of 2.8 to 3.6 wt.-%,
- the ethylene content of the second propylene copolymer fraction (B) is in the range of 4.2 to 6.5 wt.-%, more preferably in the range of 4.4 to 6.3 wt.-%, calculated or determined by quantitative $^{13}C$-NMR spectroscopy, and
- the ethylene content of the first propylene ethylene random copolymer fraction (A) is at least 1.0 wt.-%, preferably 1.0 to 5.0 wt.-%, more preferably 1.5 to 4.5 wt.-% lower than the ethylene content of the second propylene copolymer fraction (B); and

wherein the composition has an $MFR_2$ in the range of 6 to 30 g/10 min, preferably 8 to 25 g/10 min, more preferably 10 to 23 g/10 min, determined according to ISO 1133 (230 °C, 2.16 kg load).

**2.** An $\alpha$-nucleated propylene ethylene random copolymer composition comprising a monophasic polypropylene ethylene random copolymer (R-PP) being multimodal, preferably bimodal, in view of at least the weight average molecular weight Mw, and comprising at least two propylene ethylene random copolymer fractions (A) and (B), wherein

- the combined amount of the two propylene ethylene random copolymer fractions (A) and (B) is at least 90 wt.-%, based on the total weight of the propylene ethylene random copolymer (R-PP),
- the weight ratio between the first propylene copolymer fraction (A) and the second propylene copolymer fraction (B) is in the range of 40:60 to 60:40,
- the difference between the Mw, determined by gel permeation chromatography according to ISO 16014-4:2003 and ASTM D 6474-99, of the first propylene ethylene random copolymer fraction (A) and the Mw of the propylene ethylene random copolymer composition (R-PP) is at least 5,000 g/mol, preferably at least 7,500 g/mol,
- the difference between the number average molecular weight Mn, determined by gel permeation chromatography according to ISO 16014-4:2003 and ASTM D 6474-99, of the propylene ethylene random copolymer (R-PP) and the Mn of the first propylene ethylene random copolymer fraction (A) is less than 5,000 g/mol, preferably less than 4,000 g/mol,
- the molecular weight distribution MWD (Mw/Mn), determined by gel permeation chromatography according to ISO 16014-4:2003 and ASTM D 6474-99, of the R-PP is at least 5.5, preferably in the range of 6.0 to 12.0, more preferably 7.8 to 11.0; and

wherein the composition has an $MFR_2$ in the range of 6 to 30 g/10 min, preferably 8 to 25 g/10 min, more preferably 10 to 23 g/10 min, determined according to ISO 1133 (230 °C, 2.16 kg load).

**3.** The $\alpha$-nucleated propylene ethylene random copolymer composition according to claim 1, **characterized in that**

- the difference between the Mw, determined by Gel Permeation Chromatography (GPC) according to ISO 16014-4:2003 and ASTM D 6474-99, of the first propylene ethylene random copolymer fraction (A) and the Mw of the propylene ethylene random copolymer (R-PP) is at least 5,000 g/mol, preferably at least 7,500 g/mol,
- the difference between the number average molecular weight Mn, determined by Gel Permeation Chromatography (GPC) according to ISO 16014-4:2003 and ASTM D 6474-99, of the propylene ethylene random copolymer (R-PP) and the Mn of the first propylene ethylene random copolymer fraction (A) is less than 5,000 g/mol, preferably less than 4,000 g/mol, and
- the molecular weight distribution MWD (Mw/Mn), determined by gel permeation chromatography according to ISO 16014-4:2003 and ASTM D 6474-99, of the R-PP is at least 5.5, preferably in the range of 6.0 to 12.0, more preferably 7.8 to 11.0.

**4.** The $\alpha$-nucleated propylene ethylene random copolymer composition according to any of the preceding claims, **characterized in that**

- the first propylene ethylene random copolymer fraction (A) has a $MFR_2$, determined according to ISO 1133 (230 °C, 2.16 kg load), of at least 5 g/10min, preferably in the range of 5.0 to 15.0 g/10min, more preferably in the range of 7.0 to 11.9 g/10min; and
- the second propylene ethylene random copolymer fraction (B) has a $MFR_2$ of less than 40 g/10min, preferably in the range of 10.0 to 35.0 g/10min, more preferably in the range of 12.0 to 30.0 g/10min, calculated or determined according to ISO 1133 (230 °C, 2.16 kg load); and
- the ratio of the $MFR_2$, determined according to ISO 1133 (230 °C, 2.16 kg load), of the R-PP to the $MFR_2$ of fraction (A) is more than 1.0, preferably in the range of 1.05 to 1.90, more preferably in the range of 1.10 to 1.80.

**5.** The $\alpha$-nucleated propylene ethylene random copolymer composition according to any of the preceding claims, **characterized in that** the ethylene content of the composition, determined by quantitative $^{13}C$ NMR spectroscopy, is in the range of 2.5 to 5.0 wt.-%, preferably 3.0 to 4.8 wt.-%, based on the total weight of the composition.

**6.** The $\alpha$-nucleated propylene ethylene random copolymer composition according to any one of the preceding claims, wherein the amount of the propylene ethylene random copolymer (R-PP) is more than 85 wt.-%, preferably in the range of 90 to 99.9 wt.-%, more preferably in the range of 95 to 99.9 wt.-%, based on the total weight of the propylene ethylene random copolymer composition.

**7.** The $\alpha$-nucleated propylene ethylene random copolymer composition according to any of the preceding claims,

wherein the polypropylene copolymer (R-PP) is non-visbroken, preferably is a reactor-made propylene ethylene random copolymer; and/or does not contain peroxide(s) or decomposition products of peroxide(s).

**8.** The α-nucleated propylene ethylene random copolymer composition according to any of the preceding claims, wherein the monophasic propylene ethylene random copolymer (R-PP) has 2,1-regio-defects, measured by quantitative $^{13}$C-NMR, of less than 0.4 mol-%.

**9.** The α-nucleated propylene ethylene random copolymer composition according to any of the preceding claims, **characterized in that** the composition comprises additionally from 0.0500 to 0.3500 wt.-%, preferably from 0.0500 to 0.2200 wt.-%, based on the total weight of the composition, of a first nucleating agent, wherein the first nucleating agent (NU1) is a sorbitol-derivative having a structure of formula I-a or a nonitol-derivative having a structure of formula I-b, or combinations thereof:

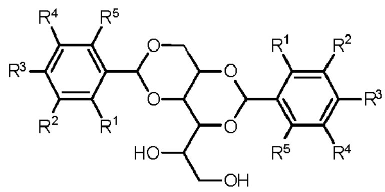
(I-a)

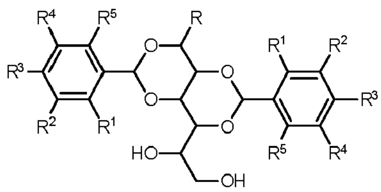
(I-b)

wherein R is selected from $C_2$ to $C_6$ alkyl groups;
wherein $R^1$ to $R^5$ are independently selected from the group consisting of hydrogen, alkyl, alkenyl, alkynyl, alkoxy, aryloxy, hydroxyalkyl, cycloalkyl, cycloalkenyl, aryl, substituted aryl, halide, amino and thioether and combinations thereof, and optionally any adjacent $R^1$ to $R^5$ are linked together to form a 5-membered or 6-membered ring.

**10.** The α-nucleated propylene ethylene random copolymer composition according to claim 9, **characterized in that** the first nucleating agent (NU1) is selected from the group consisting of 1,3:2,4 Dibenzylidene sorbitol (DBS), 1,3:2,4 Di(methylbenzylidene) sorbitol (MDBS), 1,3:2,4 Bis(3,4-dimethylbenzylidene) sorbitol (DMDBS) or 1,2,3-trideoxy-4,6:5,7-bis-0-((4-propylphenyl) methylene) nonitol, or combinations thereof, preferably is 1,3:2,4 Bis(3,4-dimethylbenzylidene) sorbitol (DMDBS).

**11.** The α-nucleated propylene ethylene random copolymer composition according to claims 9 or 10, **characterized in that** the composition comprises additionally 0.0010 to 0.1000 wt.-%, preferably 0.0010 to 0.0500 wt.-%, more preferably 0.0010 to 0.0250 wt.-%, based on the total weight of the composition, of a second nucleating agent (NU2), wherein the second nucleating agent comprises the salt of a bridged or unbridged cyclohexane dicarboxylic acid represented by Formula (II-a) or (II-b):

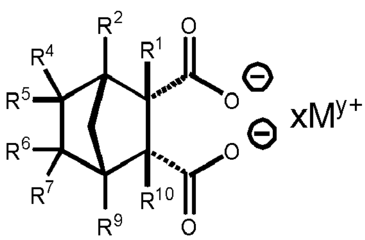
(II-a)
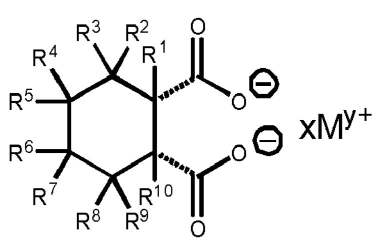
(II-b),

wherein x is either 1 or 2, y is either 1 or 2, x*y is 2, and wherein for y = 1, M is an alkali metal, and for y=2, M is an alkaline earth metal; and wherein $R^1$ to $R^{10}$ are independently a hydrogen atom, an alkyl group having 1 to 9 carbon atoms, a hydroxyl group, an alkoxy group having 1 to 9 carbon atoms, an amino group, an alkylamine group having 1 to 9 carbon

atoms, a halogen atom, a phenyl group, or a group represented by the formula $R-(R'-O)_n-$, R being an alkyl group having 1 to 3 carbon atoms, R' being an alkylene group having 2 or 3 carbon atoms, and n being an integer of 1 to 4; and any two alkyl groups of $R^1$ to $R^{10}$ may be linked to each other, thereby forming a carbon ring having 3 to 6 carbon atoms.

**12.** The $\alpha$-nucleated polypropylene ethylene random copolymer composition according to claim 11, wherein the nucleating agent (NU2) comprises the salt of a bridged or unbridged cyclohexane dicarboxylic acid represented by Formula (II-a) or (II-b) in an amount of ≥ 50 wt.-%, based on the total weight of the nucleating agent (NU2); and/or wherein the salt of a bridged or unbridged cyclohexane dicarboxylic acid represented by Formula (II-a) or (II-b) is the calcium salt of cis-1,2-cyclohexanedicarboxylic acid.

**13.** The $\alpha$-nucleated propylene ethylene random copolymer composition according to any one of the preceding claims, wherein the composition has the following properties:

- a Charpy notched impact strength (NIS) at +23 °C, as determined according to ISO 179 using 80×10×4 $mm^3$ test bars injection-moulded in line with ISO 19069-2, in the range from 6.0 to 9.0 $kJ/m^2$, more preferably in the range 6.5 to 8.5 $kJ/m^2$, and
- a haze value, determined according to ASTM D 1003-07 on 60 × 60 $mm^2$ plaques with a thickness of 2 mm prepared at 200 °C according to ISO19069-2, of less than 40%, preferably less than 30% more preferably in the range of 1 to 29%.

**14.** The $\alpha$-nucleated propylene ethylene random copolymer composition according to any one of the preceding claims, wherein the composition has

- an optomechanical ability (OMA) determined according to the following equation

$$OMA = \frac{Flexural\ Modulus\ [\mathrm{MPa}]\ \ x\ NIS\ [\mathrm{kJ\ m^{-2}}]}{Haze\ (2\ mm, 200°C)\ [\%]}$$

of at least 190 MPa kJ $\%^{-1}$ $m^{-2}$, preferably in the range of 200 to 500 MPa kJ $\%^{-1}$ $m^{-2}$; and
- a weighted impact haze (WIH) determined according to the following equation

$$WIH = \frac{NIS^2}{Haze\ (2\ mm, 200°C)}$$

of at least 1.3 $kJ^2$ $\%^{-1}$ $m^{-4}$, preferably in the range of 1.5 to 5.0 $kJ^2$ $\%^{-1}$ $m^{-4}$;

wherein the flexural modulus was determined according to ISO 178, the NIS at +23 °C determined according to ISO 179 using 80×10×4 $mm^3$ test bars injection-moulded in line with ISO 19069-2, and the haze value determined according to ASTM D 1003-07 on 60 × 60 $mm^2$ plaques with a thickness of 2 mm prepared at 200 °C according to ISO19069-2.

**15.** An injection or blow molded article comprising, preferably consisting of the $\alpha$-nucleated propylene ethylene random copolymer composition according to any of claims 1 to 14.

Europäisches Patentamt
European Patent Office
Office européen des brevets

# EUROPEAN SEARCH REPORT

Application Number
EP 24 15 6233

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2019/002345 A1 (BOREALIS AG [AT]) 3 January 2019 (2019-01-03)<br>* claim 1; examples IE1-5; tables 1-2 * | 1,3-15 | INV.<br>C08F210/06 |
| X | WO 2020/239561 A1 (BOREALIS AG [AT]) 3 December 2020 (2020-12-03)<br>* page 1, lines 21-28 *<br>* page 17, line 35 - page 18, line 2 *<br>* page 18, line 36 - page 19, line 3 *<br>* page 30, lines 1-5 *<br>* claim 1+2; example A; table 1 * | 1,3-7,9, 10,13-15 | |
| X | EP 2 808 352 A1 (ABU DHABI POLYMERS CO LTD BOROUGE [AE]; BOREALIS AG [AT]) 3 December 2014 (2014-12-03)<br>* paragraphs [0002] - [0006], [0036], [0141] - [0142], [0145]; claims 1, 5-7; example Ex2; tables 1, 2 * | 1,3-7,9, 10,13-15 | |
| X | WO 2023/156412 A1 (ABU DHABI POLYMERS CO LTD BOROUGE SOLE PROPRIETORSHIP L L C [AE] ET AL) 24 August 2023 (2023-08-24)<br>* claim 1+6; examples IE, CE1; tables 1-3 * | 1,3-15 | TECHNICAL FIELDS SEARCHED (IPC)<br>C08F<br>C08L |

~~The present search report has been drawn up for all claims~~

2

| Place of search | Date of completion of the search | Examiner |
|---|---|---|
| Munich | 10 July 2024 | Bernhardt, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

Application Number
EP 24 15 6233

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1, 3(completely); 4-15(partially)

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 24 15 6233

The Search Division considers that the present European patent application does not comply with the requirements of unity of invention and relates to several inventions or groups of inventions, namely:

1. claims: 1, 3(completely); 4-15(partially)

An a-nucleated propylene ethylene random copolymer composition comprising a monophasic polypropylene ethylene random copolymer (R-PP) being multimodal in view of at least the ethylene content, and comprising at least two propylene ethylene random copolymer fractions (A) and (B), wherein
wt(A)+wt(B) is at least 90 wt.-%(R-PP),
wt(A):wt(B) is in the range of 40:60 to 60:40,
C2(A) is in the range of 2.5 to 4.0 wt.-%,
C2(B) is in the range of 4.2 to 6.5 wt.-%
C2(A) is at least 1.0 wt.-% lower than C2(B); and
MFR2(composition) is in the range of 6 to 30 g/10 min.

---

2. claims: 2(completely); 4-15(partially)

An a-nucleated propylene ethylene random copolymer composition comprising a monophasic polypropylene ethylene random copolymer (R-PP) being multimodal in view of at least the weight average molecular weight Mw, and comprising at least two propylene ethylene random copolymer fractions (A) and (B), wherein
wt(A)+wt(B) is at least 90 wt.-%(R-PP),
wt(A):wt(B) is in the range of 40:60 to 60:40,
delta Mw(A) and Mw(R-PP) is at least 5,000 g/mol,
delta Mn(A) and Mn(R-PP) is less than 5,000 g/mol
MWD(R-PP) is at least 5.5 and
MFR2(composition) is in the range of 6 to 30 g/10 min.

---

## ANNEX TO THE EUROPEAN SEARCH REPORT ON EUROPEAN PATENT APPLICATION NO.

EP 24 15 6233

This annex lists the patent family members relating to the patent documents cited in the above-mentioned European search report. The members are as contained in the European Patent Office EDP file on
The European Patent Office is in no way liable for these particulars which are merely given for the purpose of information.

10-07-2024

| Patent document cited in search report | Publication date | Patent family member(s) | Publication date |
|---|---|---|---|
| WO 2019002345 A1 | 03-01-2019 | BR 112019027266 A2 | 14-07-2020 |
| | | CN 109790232 A | 21-05-2019 |
| | | CN 117467053 A | 30-01-2024 |
| | | EA 201992705 A1 | 03-06-2020 |
| | | EP 3645579 A1 | 06-05-2020 |
| | | ES 2960629 T3 | 05-03-2024 |
| | | KR 20200024245 A | 06-03-2020 |
| | | US 2020207964 A1 | 02-07-2020 |
| | | US 2022145055 A1 | 12-05-2022 |
| | | WO 2019002345 A1 | 03-01-2019 |
| WO 2020239561 A1 | 03-12-2020 | CN 113840846 A | 24-12-2021 |
| | | EP 3976675 A1 | 06-04-2022 |
| | | ES 2950839 T3 | 13-10-2023 |
| | | US 2022251259 A1 | 11-08-2022 |
| | | WO 2020239561 A1 | 03-12-2020 |
| EP 2808352 A1 | 03-12-2014 | BR 112015027434 A2 | 29-08-2017 |
| | | CN 105189577 A | 23-12-2015 |
| | | EP 2808352 A1 | 03-12-2014 |
| | | EP 3004189 A1 | 13-04-2016 |
| | | EP 3412692 A1 | 12-12-2018 |
| | | ES 2646195 T3 | 12-12-2017 |
| | | MY 192783 A | 08-09-2022 |
| | | US 2016068624 A1 | 10-03-2016 |
| | | WO 2014191506 A1 | 04-12-2014 |
| WO 2023156412 A1 | 24-08-2023 | CN 118660935 A | 17-09-2024 |
| | | IL 314864 A | 01-10-2024 |
| | | TW 202340353 A | 16-10-2023 |
| | | WO 2023156412 A1 | 24-08-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019002345 A1
- US 5234879 A
- WO 9219653 A
- WO 9219658 A
- WO 9933843 A
- WO 2016066446 A
- WO 2015117948 A
- EP 0887379 A1
- WO 9212182 A
- WO 2015117948 A1


### Non-patent literature cited in the description


- **SINGH, G** ; **KOTHARI, A** ; **GUPTA, V**. *Polymer Testing*, 2009, vol. 28 (5), 475
- **ZHOU, Z.** ; **KUEMMERLE, R** ; **QIU, X** ; **REDWINE, D** ; **CONG, R** ; **TAHA, A** ; **BAUGH, D** ; **WINNIFORD, B**. *J. Mag. Reson*, 2007, vol. 187, 225
- **BUSICO, V** ; **CARBONNIERE, P** ; **CIPULLO, R** ; **PELLECCHIA, R** ; **SEVERN, J.** ; **TALARICO, G**. *Macromol. Rapid Commun.*, 2007, vol. 28, 1128
- **CHENG, H. N**. *Macromolecules*, 1984, vol. 17, 1950
- **RESCONI, L** ; **CAVALLO, L** ; **FAIT, A** ; **PIEMONTESI, F**. *Chem. Rev.*, 2000, vol. 100, 1253
- **WANG, W-J.** ; **ZHU, S**. *Macromolecules*, 2000, vol. 33, 1157
- **BUSICO, V** ; **CIPULLO, R**. *Prog. Polym. Sci.*, 2001, vol. 26, 443
- **BUSICO, V.** ; **CIPULLO, R** ; **MONACO, G** ; **VACATELLO, M.** ; **SEGRE, A.L**. *Macromoleucles*, 1997, vol. 30, 6251
- **RESCONI, L** ; **CAVALLO, L** ; **FAIT, A.** ; **PIEMONTESI, F**. *Chem. Rev.*, 2000, vol. 100, 1253
- **RESCONI, L** ; **CAVALLO, L.** ; **FAIT, A** ; **PIEMONTESI, F**. *Chem. Rev.*, 2000, vol. 100, 1253
- **WANG, W-J** ; **ZHU, S.** *Macromolecules*, 2000, vol. 33, 1157
- **CHENG, H. N.** *Macromolecules*, 1984, vol. 17, 1950
- **KAKUGO, M.** ; **NAITO, Y** ; **MIZUNUMA, K.** ; **MIYATAKE, T.** *Macromolecules*, 1982, vol. 15, 1150
- *CHEMICAL ABSTRACTS*, 6683-19-8
- *CHEMICAL ABSTRACTS*, 31570-04-4
- *CHEMICAL ABSTRACTS*, 1592-23-0
- *CHEMICAL ABSTRACTS*, 557-05-1
- *CHEMICAL ABSTRACTS*, 135861 -56-2